**Eurcpäisches Patentamt**

**European Patent Office**

**Office européen des brevets**

(11) Numéro de publication: **0 387 161**

**A1**

(12) **DEMANDE DE BREVET EUROPEEN**

(21) Numéro de dépôt: **90420110.0**

(51) Int. Cl.5: **H05B 6/80**

(22) Date de dépôt: **01.03.90**

(30) Priorité: **06.03.89 FR 8903127**

(43) Date de publication de la demande:
**12.09.90 Bulletin 90/37**

(84) Etats contractants désignés:
**AT BE CH DE DK ES FR GB GR IT LI LU NL SE**

(71) Demandeur: **SOCIETE PROLABO, Société Anonyme**
**12, rue Pelée**
**F-75011 Paris(FR)**

(72) Inventeur: **Benezech, Philippe Henri**
**33 Chemin de Gien de Vieux**
**F-45500 Gien(FR)**
Inventeur: **Quentin, Eric Paul François**
**9, rue Charpenet**
**F-45250 Briare(FR)**
Inventeur: **Baudet, Jean-Jacques Raymond René**
**La Vaudelle**
**F-45250 Briare(FR)**

(74) Mandataire: **Ropital-Bonvarlet, Claude**
**Cabinet BEAU DE LOMENIE, 51, avenue Jean-Jaurès**
**F-69007 Lyon(FR)**

(54) **Appareil de réaction chimique par voie humide comportant une cheminée munie d'une barrière de propagation pour les micro-ondes.**

(57) - Réaction chimique.

- L'appareil de réaction chimique par voie humide conforme à l'invention est caractérisé en ce que la cheminée est au moins en partie constituée à partir d'une enveloppe ajourée (14) constituant une barrière de propagation pour les micro-ondes.

- Application à la minéralisation.

Fig. 1

# APPAREIL DE REACTION CHIMIQUE PAR VOIE HUMIDE COMPORTANT UNE CHEMINEE MUNIE D'UNE BARRIERE DE PROPAGATION POUR LES MICRO-ONDES

La présente invention concerne le domaine technique de la réaction chimique de composés minéraux, organiques ou organo-métalliques.

On sait qu'il est nécessaire, avant la plupart des traitements d'analyse de composés tels que ci-dessus, de procéder à une réaction chimique, par exemple une minéralisation par voie humide au moyen d'acides concentrés, comme l'acide sulfurique, l'acide nitrique, l'acide perchlorique ou des mélanges de ces acides ou, encore, une saponification par la potasse alcoolique, une oxydation ou une réduction.

Pour mener à bien un tel traitement d'analyse préalable, une méthode classique consiste à disposer dans un vase, par exemple du type matras, une dose de composé à analyser, ainsi que le volume complémentaire nécessaire de réactif concentré spécifique.

Le vase est ensuite chauffé et surveillé en permanence par un opérateur qui a la charge de régler, périodiquement, les calories transmises au vase, pour éviter l'apparition de mousses et le débordement du produit. L'opérateur doit, également, agiter, périodiquement mais de façon fréquente, le mélange soumis à échauffement, afin d'entretenir une bonne homogénéité du composé dissous et chauffé. Enfin, il est aussi fréquent d'avoir à introduire des réactifs en cours de traitement, soit pour remplacer le réactif qui s'est évaporé, soit pour introduire d'autres réactifs accélérant la réaction.

Une telle surveillance est longue, fastidieuse et susceptible de provoquer des accidents physiques, parfois graves pour l'opérateur, par les risques d'explosion, de projection de la composition et par l'émanation de fumées et vapeurs corrosives.

En plus des inconvénients ci-dessus, il faut noter que la méthode ainsi appliquée ne permet pas de contrôler efficacement l'éventuel départ de fractions des produits entrant dans la composition de base et entraînées par les fumées et vapeurs qui s'échappent du col du vase. Il s'ensuit que le résultat ultérieur d'analyse s'en trouve fortement perturbé, sans qu'un moyen de contrôle ne puisse apporter une possibilité d'évaluation de l'existence et de l'importance de ce facteur négatif aléatoire.

Pour tenter de parfaire un tel procédé, différentes propositions d'amélioration ont été développées et mises en oeuvre.

C'est ainsi qu'on a proposé des installations mettant en oeuvre, en tant que moyen de chauffage, au lieu d'une flamme directe, une batterie de creusets à rayonnement infra-rouge dont la puissance de chacun peut être réglée en agissant sur une alimentation électrique propre. Une telle installation ne permet pas de régler les problèmes de la surveillance permanente, de l'agitation et de l'incertitude des résultats obtenus, étant donné que ces trois facteurs sont toujours fonction de l'attention permanente d'un ou de plusieurs opérateurs.

Toujours dans le but d'améliorer un tel procédé de traitement préalable d'analyse, on a proposé d'utiliser, en tant que générateur de chaleur, un four micro-ondes muni d'une prise d'aspiration des fumées et vapeurs.

Le brevet **US 4 090 168** enseigne une telle proposition et préconise la mise en oeuvre d'un four micro-ondes dans la cavité duquel est placé un vase contenant l'échantillon à traiter.

Cette technique présente des avantages certains, car l'application de micro-ondes permet une répartition quasi uniforme de l'énergie et donc un chauffage à coeur du composé à traiter. Pour les mêmes raisons, une telle technique permet de briser les mousses qui se développent avec la technique précédente, lors de la montée en température du composé. Une surveillance permanente de l'évolution du traitement n'est donc plus nécessaire, théoriquement, et libère ainsi un opérateur de cet aspect fastidieux et dangereux de la méthode antérieure.

En outre, un four micro-ondes est connu pour ses propriétés d'absence d'inertie thermique, ce qui permet de régler plus précisément l'énergie transmise à l'échantillon.

On s'est, cependant, aperçu qu'un tel appareil ne donnait pas encore satisfaction. On a, en effet, constaté qu'un certain nombre de produits ne pouvaient pas être traités, en raison, notamment, de l'ébullition rapide du réactif additionné.

Par ailleurs, on a constaté aussi que les résultats d'analyse ultérieurs n'étaient pas toujours précis et faisaient intervenir un facteur d'incertitude non négligeable pour certains produits, voire rédhibitoire pour d'autres. Plus précisément, on a pu constater une perte de certains produits, perte mise au compte d'un entraînement de fractions de ces produits par les fumées et vapeurs importantes, par évaporation sélective et/ou par effet de primage.

En raison de la forte vaporisation, on a aussi constaté une forte pollution de la cavité d'application exigeant une opération de nettoyage des parois de cette cavité après chaque réaction et avant de procéder au traitement subséquent d'un échantillon de même nature ou non.

La forte évaporation a aussi pour résultat négatif de développer, à l'intérieur de la cavité où le récipient est placé, un brouillard de vapeur s'opposant à toute appréciation visuelle du déroulement de la réaction en cours.

La mise en oeuvre de la technique, préconisée par ce brevet US, ne peut donc pas être envisagée pratiquement dans le domaine industriel. Ceci a d'ailleurs été perçu depuis déjà quelque temps puisque la publication **BARRETT, DAVIDOWSKI, PENARO, COPELAND, anal. Chem. 1978-50, 1021** a fait paraître une technique améliorée et dérivée de l'enseignement de ce brevet US et visant à réduire, sans les supprimer, les inconvénients découlant de la forte vaporisation.

Pour améliorer notablement la technique de minéralisation, faisant appel à l'énergie micro-ondes, il a été préconisé, selon la demande **FR n° 84-03 496**, de réaliser l'appareil de réaction chimique de manière qu'il comprenne un récipient en verre délimitant une capacité de rétention prolongée par un col sensiblement cylindrique. Un tel appareil comprend, également, une cavité d'application d'énergie micro-ondes possédant une hauteur sensiblement égale à la hauteur de la capacité du récipient, présentant, dans son dessus, une ouverture en permanence ouverte, de section égale, au jeu près, à la plus grande mesure de la capacité prise perpendiculairement à l'axe du col et comportant une cheminée bordant l'ouverture et s'élevant sur une hauteur suffisante, en fonction de la section de passage de l'ouverture, pour former une barrière d'absorption s'opposant à la propagation des micro-ondes à l'extérieur de la cavité.

Incontestablement, une telle proposition a enrichi l'art antérieur en fournissant des moyens permettant de procéder à une réaction chimique d'un échantillon individuel, sans risque de pollution extrême de la cavité.

Une telle technique a permis de contrôler, par ailleurs, plus précisément, le taux de reflux, afin de disposer d'une appréciation de réaction beaucoup plus fine.

Les appareils qui ont été construits, sur la base de cette proposition, se sont, toutefois, révélés limités dans la mise en oeuvre pratique pour les raisons qui suivent.

Les appareils construits ont été, initialement, organisés pour permettre le chauffage individuel de récipients, du type matras, offrant une capacité utile de 15 ml, apte à contenir une masse d'environ 250 mg de composés minéraux organiques ou organo-métalliques devant être traités. Il s'avère que, pour améliorer la précision de minéralisation et pour répondre à une tendance actuelle de traitement, il conviendrait de pouvoir disposer d'une capacité utile de 30 ml offrant une capacité de rétention de 0,5 à 10 g de composés.

Dans le cas de mise en oeuvre de la technique selon le brevet français ci-dessus pour le déroulement d'une minéralisation de type **Kjeldahl**, il apparaît important, sinon impératif, de pouvoir disposer d'une capacité totale de 250 ml au moins, afin d'éviter des opérations de transfert après minéralisation.

Les appareils mis en oeuvre selon le brevet français ci-dessus se sont, en outre, avérés, à l'usage, relativement fragiles, en raison de l'obligation d'introduire, par la cheminée, chaque récipient qui risque d'être brisé. Un tel risque existe aussi par choc thermique.

Les manipulations qui sont intervenues ont permis de constater des bris de récipients ou matras, avec écoulement, dispersion ou projection du composé à traiter à l'intérieur de la cavité d'application.

Pour différentes raisons bien compréhensibles, un tel risque devrait être minimisé, sinon éliminé pour que l'utilisation pratique répondre aux exigences industrielles.

En d'autres termes, il s'est avéré que les appareils disponibles selon la demande française ci-dessus ne donnaient pas entière satisfaction, en raison, principalement, de la limitation de capacité qu'ils imposaient aux récipients du type matras et des risques de bris de ces derniers.

Les besoins, à partir d'une telle constatation peuvent être exprimés comme voisins d'une nécessité de doubler cette capacité.

Une telle exigence pourrait être considérée comme ne posant pas de problème, à partir du moment où il apparaît concevable d'extrapoler les différentes caractéristiques dimensionnelles présidant à la construction des appareils, récipients et matras selon le brevet français ci-dessus.

Il s'agit, en fait, d'une simple approche théorique négligeant fondamentalement l'énergie mise en oeuvre pour assurer la montée en température de l'échantillon devant être traité.

Pour répondre positivement aux exigences qui viennent d'être rappelées ci-dessus, il est obligatoire d'envisager d'augmenter le diamètre de l'ouverture de communication entre la cheminée et la cavité d'application micro-ondes. Ce faisant, il apparaît, en tant que corollaire, nécessaire d'augmenter, de façon correspondante, la hauteur de la cheminée, de manière que cette dernière se comporte toujours comme une barrière s'opposant à la propagation des micro-ondes dans le milieu ambiant, afin de respecter les critères essentiels de sécurité pour le personnel servant.

Or, on sait que, pour des énergies de micro-ondes de 2,45 GHz, une limite théorique de section utile de l'ouverture, entre cavité d'application et cheminée, se trouve siuée à environ 7 cm de diamètre.

Il s'agit, en réalité, d'une simple valeur théorique, la limite pratique devant être respectée, à partir du moment où il est envisagé de recourir à l'emploi de récipients ou matras ayant une capacité utile de 300 ml, se trouvant notablement inférieure.

Le choix d'une section de passage utile, compatible avec des récipients d'une telle capacité, conduit à une structure se caractérisant par un état de fuite ou de conduction permanente des micro-ondes, sans aucune préservation de l'environnement, ni aucune protection du personnel chargé de la conduite ou de la surveillance de tels appareils.

Pour tenter de résoudre le problème ainsi posé de la conduction permanente de l'énergie micro-ondes à travers la cheminée, il pourrait être envisagé de mettre en oeuvre des portes ou chicanes, en forme de demi-coquilles ou non enserrant l'extrémité supérieure ouverte de la cheminée, ainsi que celle du récipient ou du matras.

Une telle structure apparaît encombrante, peu pratique de mise en oeuvre et, surtout, onéreuse de conception, de construction, d'achat et d'entretien.

En réalité, une telle technique ne serait pas à même, non plus, de donner pleinement satisfaction dans l'application à la minéralisation de composés minéraux organiques ou organo-métalliques. En effet, à partir du moment où la cheminée se comporte comme une cavité d'application secondaire de l'énergie micro-ondes, la hauteur de cette cheminée propage l'énergie micro-ondes qui est responsable d'un certain échauffement des composés minéraux s'échelonnant sur toute la hauteur utile du col du récipient. Or, on sait que le procédé de minéralisation conduit à la production de vapeurs qui doivent, normalement, être condensées en partie intermédiaire du récipient ou matras, afin de donner lieu à un reflux permettant de contrôler, de façon beaucoup plus précise, la phase de minéralisation en limitant les effluents.

A partir du moment où l'énergie micro-ondes peut être responsable d'une montée en température des traces, vapeurs ou éléments de composés, en partie déjà chauffés, la phase de condensation et de reflux n'intervient plus et le ou les composés sont vaporisés sur toute la hauteur de la cheminée.

Outre la perte quantitative particulièrement importante dans le cas d'une réaction de minéralisation, il devient nécessaire de mettre en oeuvre des moyens de bouchage ou de connexion spécifiques, afin de tenter de réduire la pollution du milieu environnant et de diminuer les pertes.

En d'autres termes, si la proposition structurelle selon la demande française apporte un avantage considérable par rapport à la technique antérieure, il s'avère qu'elle ne fournit pas encore une proposition complètement satisfaisante, en raison des inconvénients cités ci-dessus.

L'objet de l'invention vise, justement, à remédier à ces inconvénients en proposant des perfectionnements susceptibles d'être apportés à la technique divulguée par la demande française rappelée ci-dessus.

Pour atteindre ces objectifs, l'appareil de réaction chimique conforme à la présente invention est caractérisé selon les termes de la revendication 1.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une coupe-élévation de l'appareil de réaction chimique par voie humide conforme à l'invention.

La **fig. 2** est une coupe en plan prise sensiblement selon la ligne **II-II** de la **fig. 1**.

La **fig. 3** est une coupe-élévation, analogue à la **fig. 1**, illustrant une variante de réalisation.

La **fig. 4** est une coupe transversale prise selon la ligne **IV-IV** de la **fig. 3**.

Les **fig. 5** et **6** sont des coupes-élévations illustrant deux autres exemples de réalisation de l'objet de l'invention.

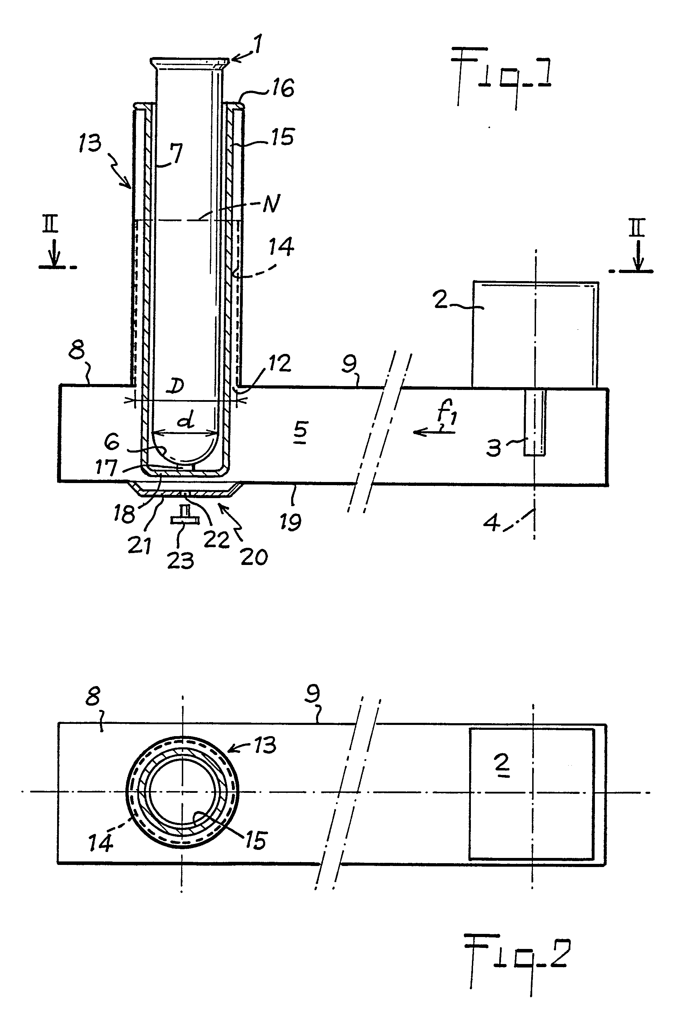

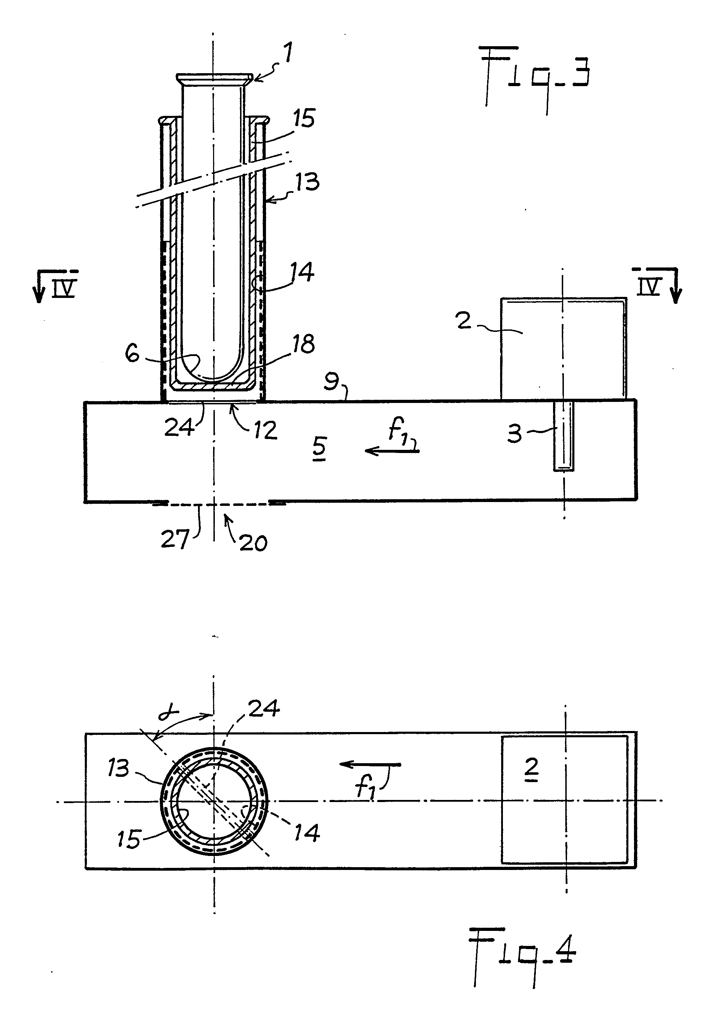

Les **fig. 1** et **2** montrent, de façon schématique, un appareil destiné à soumettre à une réaction chimique, par voie humide, un composé disposé dans un récipient **1** dans lequel on introduit, également, au moins un réactif spécifique.

L'appareil comprend un générateur de micro-ondes **2** comportant une antenne **3** émettant, à partir d'un plan émissif **4** des micro-ondes dans une cavité d'application **5** avec laquelle le récipient **1** doit être en relation.

Selon l'invention, le récipient **1**, tel que représenté à la **fig. 1**, est réalisé en verre ou autre matière transparente aux micro-ondes pour délimiter, à sa base, une capacité de rétention utile **6** prolongée par un col **7** de grande longueur, de section cylindrique constante. De préférence, le récipient **7** est conformé de telle manière que la capacité **6** s'apparente à un volume sensiblement hémisphérique, dont le diamètre $\underline{d}$ pris perpendiculairement à l'axe du col **7**, est égal à celui de ce dernier. Le récipient **1** pourrait aussi être réalisé, par exemple, en polycarbonate ou en polytétrafluoroéthylène et présenter une forme différente, en fonction de la nature du composé et de la réaction chimique à lui faire subir. Ainsi, le récipient **7** pourrait être cylindrique à fond plat.

La cavité **5** est, dans le cas présent, constituée par le segment terminal **8** d'un guide d'ondes **9**. Le segment **8** comporte des moyens techniques habituellement mis en oeuvre pour assurer et améliorer le cheminement et la propagation des micro-ondes émises par l'antenne **3** dans une direction générale de propagation selon la flèche $f_1$. Dans une forme de réalisation, le segment **8** présente une section constante, sensiblement équivalente à celle du guide **9** et peut comporter en bout une charge d'eau.

Le segment **8** est, par exemple, constitué par une enveloppe parallélépipédique réalisée en acier inoxydable ou en laiton. L'enveloppe comporte, dans sa paroi horizontale supérieure, une ouverture **12**, dans le cas présent circulaire, en permanence ouverte et dont le diamètre $\underline{D}$ est supérieur au diamètre $\underline{d}$ de la capacité **6** du récipient **1**. L'ouverture circulaire **12** est située à une distance déterminée du fond du segment **8**, de manière que son axe vertical corresponde, sensiblement, à une zone de formation d'un ventre par les ondes émises par l'antenne **3** et se propageant dans le sens de la flèche $f_1$. Afin d'assurer cette correspondance, l'enveloppe est munie d'un dispositif d'accord non représenté.

L'ouverture **12** est bordée par une cheminée **13** de forme générale cylindrique, qui est destinée à assumer une première fonction de protection et, de préférence, de suspension du récipient **1**, ainsi qu'une fonction de barrière de propagation des micro-ondes lorsque les conditions dimensionnelles le permettent.

Pour que cette fonction de barrière de propagation puisse être assumée dans tous les cas, même lorsque l'appareil est construit pour admettre l'insertion d'un récipient **1** de capacité notable, par exemple voisine de 300 ml, lui conférant une section ou un diamètre $\underline{d}$ voisin ou supérieur à 4 cm, il est prévu, selon l'invention, de réaliser la cheminée **13** de manière qu'elle soit, au moins en partie, constituée à partir d'une enveloppe ajourée **14** formant, par elle-même, une barrière de propagation pour les micro-ondes. Dans l'exemple de réalisation selon la **fig. 1**, la cheminée **13** est réalisée en une matière pleine et comporte, intérieurement, un garnissage constitué par une enveloppe ajourée **14** s'élevant sur une partie au moins de la hauteur.

Par enveloppe ajourée, il convient de retenir toute matière conductrice, telle que grille ou tôle perforée.

L'enveloppe **14** permet d'accroître le diamètre de l'ouverture **12** au-delà d'une mesure théorique au-delà de laquelle, quelle que soit la hauteur de la cheminée **13**, une propagation des micro-ondes se trouve, effectivement, établie avec une dispersion dans le milieu ambiant.

Selon une autre disposition constructive de l'invention, le diamétre de la cheminée **13**, celui utile de l'enveloppe ajourée **14** et la section de passage de l'ouverture **12** sont déterminés pour permettre la mise en place d'un doigt de gant **15** réalisé en toute matière appropriée transparente aux micro-ondes. Le doigt de gant **15** présente, de préférence, en partie supérieure, une collerette **16** constituant un moyen de suspension par appui sur la section ouverte supérieure de la cheminée **13**. La hauteur du doigt de gant **15** est déterminée de manière à traverser l'ouverture **12** pour être insérée sensiblement sur toute la hauteur utile de la cavité d'application **5**. Le doigt de gant **15** pourrait être posé sur le fond de la cavité d'application. Le doigt de gant **15** constitue un élément de protection du récipient **1** dont le fond de la capacité de rétention **6** peut prendre appui, directement ou par l'intermédiaire d'un tampon **17**, sur le fond **18** du doigt de gant **15**.

Outre la fonction de protection du récipient, le doigt de gant **15** est prévu pour assumer une fonction de protection de la cavité **5** en cas de bris. Dans un tel cas, les fragments du récipient **1** et les fractions de composés sont retenues par le doigt **15** qui en permet l'extraction aisée.

La mise en oeuvre des moyens ci-dessus permet de supprimer toute propagation incontrôlée des micro-ondes dans le milieu environnant et de limiter, notamment par la présence de l'enveloppe ajourée **14**, la hauteur de propagation des micro-ondes à l'intérieur de la cheminée **13** pour délimiter un niveau $\underline{N}$ à partir duquel un refroidissement peut intervenir de façon naturelle ou forcée pour provoquer la condensation des vapeurs émises lors de la montée en température, ainsi que l'établissement d'un reflux de ces vapeurs vers la capacité de rétention à l'intérieur de laquelle la minéralisation, notamment, doit se produire.

Selon une autre disposition de l'invention, il est avantageusement prévu de réaliser la cavité d'application **5** de manière que le dessous **19** présente, à l'aplomb de l'ouverture **12**, un moyen d'évacuation **20** de tout produit liquide susceptible d'être répandu à l'intérieur de la cavité **5**. Le moyen **20** est, par exemple, constitué par une cuvette **21** qui peut être réalisée, comme cela est illustré par la **fig. 1**, par un embouti exécuté dans le fond **19**. L'embouti **21** peut être pourvu d'un trou **22** d'évacuation dont le diamètre peut être calculé pour qu'il constitue par lui-même une barrière anti-propagation des micro-ondes. Dans le cas contraire, un bouchon **23** peut être prévu pour obturer le trou **22**.

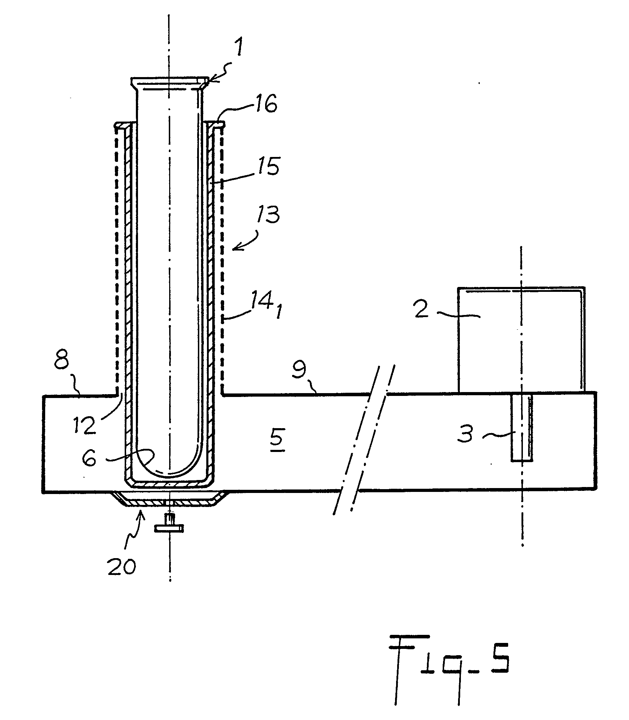

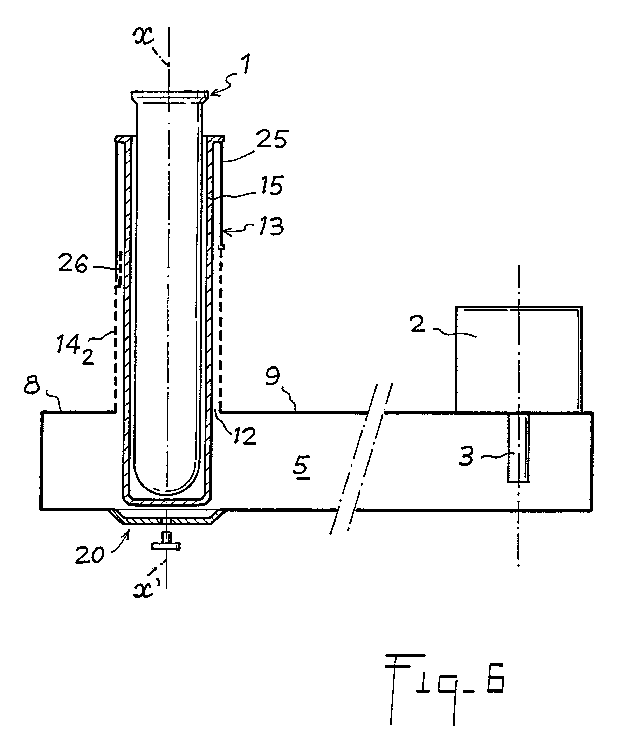

Les **fig. 3** et **4** illustrent une variante de réalisation selon laquelle l'ouverture **12**, ménagée dans le dessus **9**, est réalisée sous la forme d'une fenêtre de couplage **24** dont la direction est inclinée par rapport à celle $f_1$ de propagation des micro-ondes à l'intérieur de la cavité **5**. La fenêtre de couplage **24** est réalisée de manière connue dans la technique pour assurer une propagation des micro-ondes à l'intérieur de la cheminée **13** qui constitue, de la sorte, une cavité d'application, au même titre que la cavité **5** de l'exemple précédent. Dans un tel cas, la cheminée **13** est réalisée, comme décrit précédemment, et comporte un doigt de gant **15** dont le fond **18** s'établit à distance du dessus du segment **8**, en regard de la fenêtre **24**. Comme précédemment, le doigt de gant **15** peut assumer une fonction de suspension du récipient **1** par support direct du fond de la capacité **6** et par appui sur la section supérieure ouverte de la cheminée.

Selon une variante de réalisation, représentée à la **fig. 5**, il est prévu de réaliser la cheminée **13** en la constituant uniquement par une enveloppe ajourée **14₁** s'étendant sur toute la hauteur. Le choix de l'épaisseur et de la matière constitutive de l'enveloppe **14₁** est déterminé pour qu'elle présente une résistance mécanique suffisante pour qu'elle puisse assumer la fonction de support du doigt de gant **15** par appui de la collerette **16**.

Il doit être considéré que cet exemple de réalisation peut être envisagé avec la forme d'exécution illustré aux **fig. 3** et **4**.

Une autre forme de réalisation est illustrée par la **fig. 6**, dans laquelle la cheminée **13** est constituée par un segment **14₂** d'enveloppe ajourée s'élevant à partir du dessus du segment **8** et portant, à partir de sa partie supérieure, un segment de cheminée **25** en matière pleine. La liaison, entre les segments **14₂** et **25**, peut être assurée par soudure, comme illustré par la partie droite de la cheminée, en considération de l'axe vertical **x-x'** ou, encore, par emboîtement au niveau d'un rétreint **26** présenté par le segment d'enveloppe ajourée **14₂**.

Dans les exemples de réalisation selon les **fig. 5** et **6**, la constitution partielle, en partie basse notamment, de la cheminée **13**, par l'intermédiaire d'une enveloppe ajourée, permet un accès visuel au doigt de gant **15** qui, lorsqu'il est réalisé en une matière optiquement transparente, fournit à l'opérateur une perception visuelle du déroulement du traitement à l'intérieur du récipient **1**, lorsque ce dernier est lui-même transparent.

La **fig. 3** montre, à titre d'exemple applicable aux structures selon les **fig. 1, 5** et **6**, une possibilité de réaliser le moyen d'évacuation **20** sous la forme d'une pastille **27** en matière ajourée, constituant par elle-même une barrière à la propagation de l'énergie micro-ondes.

Dans un tel cas, il peut être envisagé de réaliser la pastille **27** sous une forme démontable, de manière à faciliter l'accès à la cavité **5** pour les opérations de nettoyage éventuelles.

L'invention n'est pas limitée aux exemples décrits et représentés, car diverses modifications peuvent y être apportées sans sortir de son cadre.

## Revendications

**1** - Appareil de réaction chimique par voie humide comprenant, d'une part, un récipient (**1**) formant une capacité de rétention utile (**6**) prolongée par un col cylindrique (**7**) et, d'autre part, une cavité d'application (**5**) associée à un générateur de micro-ondes (**2**) et possédant une ouverture (**12**) dans son dessus et une cheminée (**13**) bordant l'ouverture et s'élevant sur une hauteur suffisante pour entourer le récipient, caractérisé en ce que la cheminée est au moins en partie constituée à partir d'une enveloppe ajourée (**14**) constituant une barrière de propagation pour les micro-ondes,

**2** - Appareil de réaction chimique selon la revendication 1, caractérisé en ce que la cheminée contient un doigt de gant en une matière transparente aux micro-ondes.

**3** - Appareil de réaction chimique selon la revendication 1 ou 2, caractérisé en ce que la cheminée soutient, par son extrémité haute ouverte, une collerette du doigt de gant qui soutient le récipient par le fond de sa capacité de rétention.

**4** - Appareil de réaction chimique selon l'une des revendications 1 à 3, caractérisé en ce que la cheminée est constituée par une enveloppe (**14₁**) entièrement ajourée.

**5** - Appareil de réaction chimique selon l'une des revendications 1 à 4, caractérisé en ce que la cheminée comprend, en partie basse, une enveloppe ajourée (**14**) de hauteur inférieure à celle de la cheminée.

**6** - Appareil de réaction chimique selon la revendication 1, 4 ou 5, caractérisé en ce que l'enveloppe ajourée (**14₂**) constitue, par elle-même, la partie basse de la cheminée et se trouve surmontée par un segment d'enveloppe à paroi pleine.

**7** - Appareil de réaction chimique selon l'une des revendications 1 à 6, caractérisé en ce que la cheminée est constituée par un segment tubulaire à paroi pleine garni intérieurement, au moins en partie basse, par une enveloppe ajourée.

**8** - Appareil de réaction chimique selon l'une des revendications 1 à 7, caractérisé en ce que la cheminée borde une ouverture (**12**) pratiquée dans le dessus de la cavité d'application pour permettre le passage du doigt de gant à l'intérieur de la cavité.

**9** - Appareil de réaction chimique selon l'une des revendications 1 à 8, caractérisé en ce que la cheminée circonscrit une ouverture (**12**) constituée par une fenêtre oblongue de couplage (**24**), ménagée de façon inclinée par rapport à la direction de propagation des micro-ondes, et en ce que le doigt de gant (**15**) maintient la capacité de rétention au-dessus de la fenêtre et à l'intérieur de la cheminée qui constitue une cavité d'application secondaire.

**10** - Appareil de réaction chimique selon l'une des revendications 1 à 9, caractérisé en ce que la cheminée s'élève à l'aplomb d'une cuvette d'évacuation (**20**) ménagée dans le dessous de la cavité d'application.

**11** - Appareil de réaction chimique selon la revendication 10, caractérisé en ce que la cuvette (20) est constituée par un embouti (21) exécuté dans le dessous et pourvu d'un moyen d'évacuation (22).

12 - Appareil de réaction chimique selon la revendication 10, caractérisé en ce que la cuvette est constituée par une pastille ajourée (26).

Fig-1

Fig-2

Fig.3

Fig.4

Fig_5

Fig-6

**Office européen des brevets**

**RAPPORT DE RECHERCHE EUROPEENNE**

Numero de la demande

EP   90 42 0110

Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | EP-A-155893 (PROLABO)<br>* page 7, ligne 9 - page 7, ligne 31; figures 1, 4, 5 * | 1 | H05B6/80 |
| Y | FR-A-1113059 (SIEMENS)<br>* le document en entier * | 1 | |
| A | EP-A-274611 (BOSCH-SIEMENS)<br>* colonne 4, ligne 30 - colonne 4, ligne 43; figure 1 * | 1, 4-7 | |
| A | "Microwave transmission circuits"<br>no. 14629, 1948, George L. RAGAN, New York-Toronto-London<br>* page 115, ligne 21 - page 116, ligne 25; figure 3.1 * | 1, 4-7 | |
| A | US-A-2808571 (S.B. COHN)<br>* colonne 1, ligne 1 - colonne 1, ligne 68 *<br>* colonne 3, ligne 54 - colonne 3, ligne 63; figures 1-6 * | 1, 4-7, 9 | |
| A | US-A-2808534 (J.A. DALLONS)<br>* colonne 3, ligne 25 - colonne 3, ligne 47; figures 1, 4, 5 * | 1, 4-7 | DOMAINES TECHNIQUES RECHERCHES (Int. Cl.5 )<br><br>H05B<br>H01P |
| A | Journal of microwave power<br>vol. 11, no. 2, juin 1976, EDMONTON<br>pages 99 - 104; Vuorinen & Bruce:<br>"X-Band model of a microwave applicator for liquid heating applications"<br>* le document en entier * | 1, 9 | |
| A | FR-A-2128935 (THOMSON-CSF) | | |
| A | DE-A-2004730 (MARCONI) | | |
| A | CH-A-398831 (PATELHOLD)<br>* page 2, ligne 17 - page 2, ligne 23; figures 1, 2 * | 1, 9 | |

Le présent rapport a été établi pour toutes les revendications

| Lieu de la recherche | Date d'achèvement de la recherche | Examinateur |
|---|---|---|
| LA HAYE | 01 JUIN 1990 | SPEISER P. |

Office européen
des brevets

**RAPPORT DE RECHERCHE EUROPEENNE**

Numero de la demande

EP    90 42 0110
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| | ----- | | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 01 JUIN 1990 | SPEISER P. |